# EUROPEAN PATENT SPECIFICATION

(11) **EP 4 222 041 B1**
(45) Date of publication and mention of the grant of the patent: **04.09.2024**
(21) Application number: 21794235.8
(22) Date of filing: 01.10.2021
(51) Int. Cl.: B62D 1/183, B62D 1/187, B60R 7/06

(54) **A DRIVER'S CABIN OF A VEHICLE**
FAHRERKABINE EINES FAHRZEUGS
CABINE DE CONDUCTEUR D'UN VÉHICULE

(30) Priority: 01.10.2020 NL 2026598
(43) Date of publication of application: 09.08.2023
(73) Proprietor: DAF Trucks N.V., 5643 TW Eindhoven (NL)
(72) Inventor: KUIJPERS, Martinus Wilhelmina Paulus, 5643 TW Eindhoven (NL); VAN TILBURG, Mark Wilhelmus Theresia, 5643 TW Eindhoven (NL); DAUBIES, Tiber Jan, 5643 TW Eindhoven (NL); HOLTMAAT, Johannes Josephus Martinus Paulus, 5643 TW Eindhoven (NL); VAN HUIS, Henrick Marijn, 5643 TW Eindhoven (NL)
(74) Representative: V.O.
(86) International application number: PCT/NL2021/050596
(87) International publication number: WO 2022/071803

(56) References cited:
- WO-A1-2008/138731
- JP-A- 2000 177 600
- US-A1- 2011 314 953

## Description

The invention relates to a driver's cabin of a vehicle according to the preamble of claim 1.

Such a driver's cabin is for example known from US2011/314953A1.

In the industry of heavy goods vehicles it is a trend to be able to increase the adjustment field of the movable steering wheel column assembly in order to provide better ergonomic steering wheel position and angle during driving, combined with being able to provide an `easy entry' position during entering and leaving the cabin and during resting. It is in addition common in the industry that the internal dashboard and steering wheel assembly components are neither visible nor accessible in all possible movable steering wheel column assembly positions. Therefore steering wheel column covers are known to cover and close all gaps between the steering wheel assembly and the dashboard, which gaps could occur when repositioning the movable steering wheel column assembly through the adjustment field.

It is an object of the invention to provide an increased adjustment field of the movable steering wheel column assembly. It is a further object of the invention to provide a steering wheel column cover that can reliably cover and close all gaps between the movable steering wheel column assembly and the dashboard in conjunction with a movable steering wheel column assembly having such an increased adjustment field.

According to the invention at least one of these objects is obtained by providing a driver's cabin of a vehicle according to claim 1. By providing the movable steering wheel column cover between the first and the second stationary guide flange an increased adjustment field of the movable steering wheel column assembly can be obtained.

In an embodiment of a driver's cabin of a vehicle according to the invention the dashboard recess comprises an upper gap above the movable steering wheel column cover and a lower gap below the movable steering wheel column cover, the cabin further comprising a rotatable upper gap cover for covering the upper gap, the upper gap cover being rotatably mounted to the first and the second stationary guide flanges and having a lower edge in engagement with an upper surface of the movable steering wheel column cover and a rotatable lower gap cover for covering the lower gap, the lower gap cover being rotatably mounted to the first and the second stationary guide flanges and having an upper edge in engagement with a lower surface of the movable steering wheel column cover. Preferably, the upper gap cover and the lower gap cover are rotatably mounted to the first stationary guide flange and the second stationary guide flange on studs, the studs being provided at sides of the first and the second stationary guide flanges opposite the movable steering wheel column assembly. By such upper and lower gap covers all gaps between the movable steering wheel column assembly and the dashboard can be covered and closed in an efficient manner.

In a further embodiment of a driver's cabin of a vehicle according to the invention the upper gap cover and the lower gap cover are connected with each other by means of at least two tension springs, a first one of the at least two springs being positioned at a side of the upper and lower gap covers near the first stationary guide flange, and a second one of the at least two springs being positioned at a side of the upper and lower gap covers near the second stationary guide flange, the springs extending along the sides of the first and the second stationary guide flanges opposite the movable steering wheel column assembly. As a result of connecting the upper and lower gap covers in this manner by means of a pair of springs the tension in the springs can be kept to a minimum over the total adjustment field. In the extreme positions of the movable steering wheel column assembly the tension force in the springs is about the same as in the more neutral position. Due to the fact that the tension force in the springs can be kept low and uniform in all adjustment positions the driver will experience relatively low friction when adjusting the movable steering wheel column assembly, while the rotating upper and lower gap covers practically do not exert such large forces on the movable steering wheel column cover that scratches occur on surfaces of the movable steering wheel column cover.

The invention will be further explained with reference to the Figures, in which a non-limiting exemplary embodiment of a vehicle according to the invention is shown:
Fig. 1 schematically shows an embodiment in side view of a driver's cabin of a vehicle according to the invention;
Fig. 2 schematically shows a pictorial view of a steering wheel assembly, a stationary guide plate assembly, a dashboard and a movable steering wheel column assembly of a driver's cabin as shown in Figure 1 in side view;
Fig. 3 schematically shows an exploded view detailing a steering wheel assembly, a stationary guide plate assembly and a movable steering wheel column assembly of a driver's cabin as shown in Figure 1 in perspective;
Fig. 4 schematically shows the steering wheel assembly, the stationary guide plate assembly and the movable steering wheel column assembly of a driver's cabin as shown in Figure 3 in an assembled state in perspective;
Fig. 5 schematically shows the steering wheel assembly, the stationary guide plate assembly and the movable steering wheel column assembly of a driver's cabin as shown in Figure 4 in an assembled state in side view, further depicting parts of the dashboard; and
Fig. 6 schematically shows the steering wheel assembly, the stationary guide plate assembly and the movable steering wheel column assembly of a driver's cabin as shown in Figure 4 in an assembled state as seen from the driver.

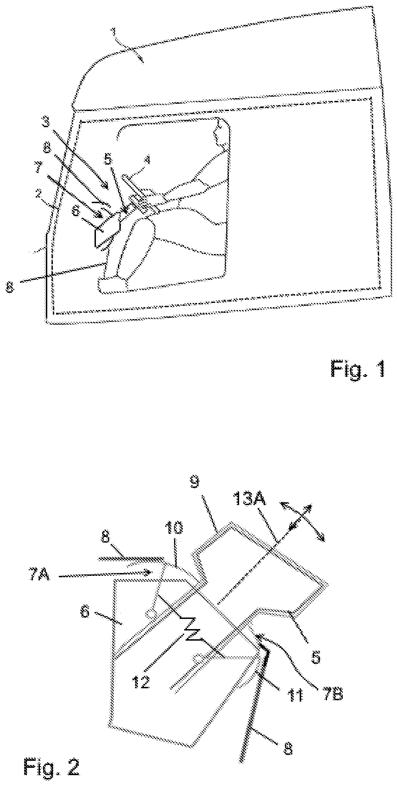

In Fig. 1 an example of an embodiment of a driver's cabin 1 of a heavy goods vehicle according to the invention is schematically shown in side view. The driver's cabin 1 comprises a cabin frame 2, a steering wheel assembly 3 for a steering wheel 4. The steering wheel assembly 4 comprises a movable steering wheel column assembly 5 and a stationary guide plate assembly 6. The steering wheel assembly 3 is positioned in a dashboard recess 7 of a dashboard 8 of the driver's cabin 1, which dashboard 8 is fixedly attached to the cabin frame 2.

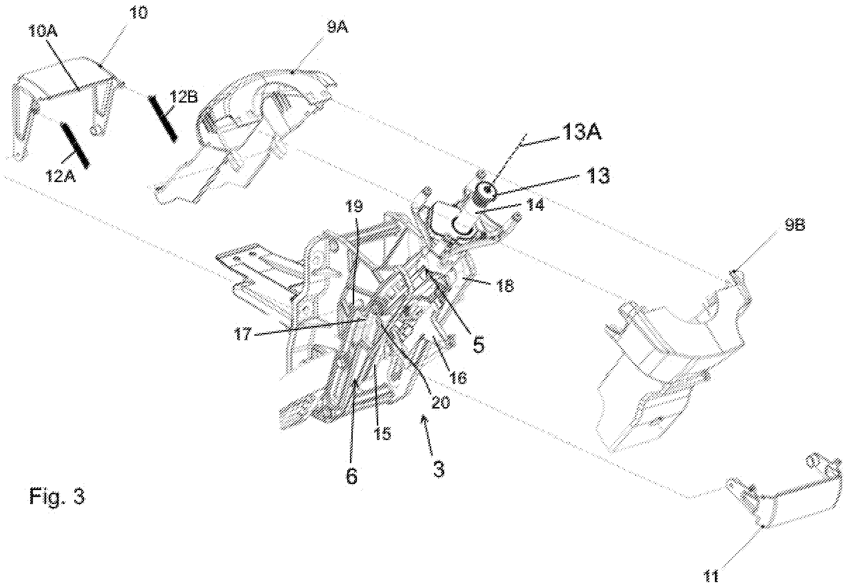

Figure 2 schematically shows in side view a pictorial view of the steering wheel assembly 3, the stationary guide plate assembly 6, the dashboard 8 together with a movable steering wheel column cover 9 of the driver's cabin 1 as shown in Figure 1. According to one aspect of the invention the movable steering wheel column cover 9 closely matches the shape of and covers the movable steering wheel column assembly 5. Figure 2 additionally show that the dashboard recess 7 comprises an upper gap 7A above the movable steering wheel column cover 9 and a lower gap 7B below the movable steering wheel column cover 9, which gaps 7A, 7B are covered by means of a rotatable upper gap cover 10 for covering the upper gap 7A, and a rotatable lower gap cover 11 for covering the lower gap 7B. The rotatable upper and lower gap covers 10, 11 are connected by means of springs 12 and rotate around studs 19, 20 that are provided on the first stationary guide flange 17 and the second stationary guide flange 18 (see Fig. 3).

The function of the movable steering wheel column assembly 5 and the stationary guide plate assembly 6 is to allow adjustment of the inclination and the position of the steering wheel to provide all type of drivers with an optimized ergonomic position of the steering wheel. In order to achieve this the movable steering wheel column assembly 5 and the stationary guide plate assembly 6 comprises cooperating means which are known in the art, and which therefore are not described here in detail. To render internal dashboard and steering wheel assembly components invisible and to make them inaccessible in all possible movable steering wheel column assembly positions the present invention provides for the rotatable upper and lower gap covers 10, 11 are connected by means of springs 12, which will be discussed in more detail below. Therefore steering wheel column covers are known to cover and close all gaps between the steering wheel assembly and the dashboard, which gaps could occur when repositioning the movable steering wheel column assembly through the adjustment field. As indicated by the arrows in Figure 2 the movable steering wheel column assembly 5 can be rotated upwards towards the so called easy-entry position and downwards to a position convenient for the driver. In addition, the movable steering wheel column assembly 5 can be displaced along a longitudinal steering axle axis 13A to a position convenient for the driver.

Fig. 3 schematically shows an exploded view detailing the steering wheel assembly 3, the stationary guide plate assembly 6 and the movable steering wheel column assembly 5 of a driver's cabin 1 as shown in Figure 1 in perspective. The movable steering wheel column assembly 5 comprising a steering axle 13 for the steering wheel 4. The steering axle 13 has a longitudinal steering axle axis 13A defining a longitudinal steering axle axis direction. A steering axle housing 14 encloses the steering axle 13, which is arranged such in the steering axle housing 14 for rotating around the longitudinal steering axle axis 13A and such that the steering axle 13 is fixed in the longitudinal steering axle axis direction with regard to the steering axle housing 14.

The movable steering wheel column assembly 5 further comprises a first movable guide plate 15 and a second movable guide plate 16. The steering axle housing 14 is positioned between the first and the second movable guide plates 15, 16 and is fixedly attached to the first and the second movable guide plates 15, 16. In other words, the steering axle housing 14 is positionally fixed with regard to the first and the second movable guide plates 15, 16.

As shown in Figure 3 the stationary guide plate assembly 6 comprises a first stationary guide flange 17 and a second stationary guide flange 18, which first and the second stationary guide flange 17, 18 are each fixedly and stationary attached to the cabin frame 2. The movable steering wheel column assembly 5 is positioned between the first stationary guide flange 17 and the second stationary guide flange 18. For allowing adjustment of the inclination and the position in the longitudinal steering axle axis direction 13A of the movable steering wheel column assembly 5 the first and the second movable guide plates 15, 16 of the movable steering wheel column assembly 5 are in this exemplary embodiment provided with cam means which engage in cooperating slots provided in the first and the second stationary guide flange 17, 18.

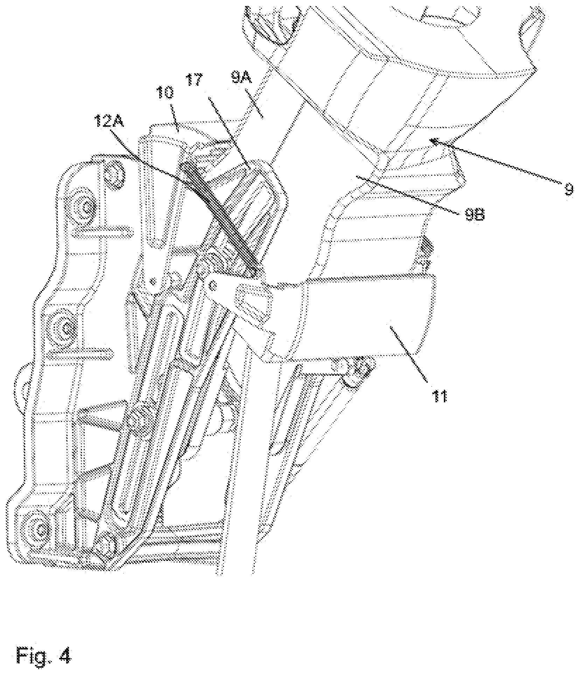

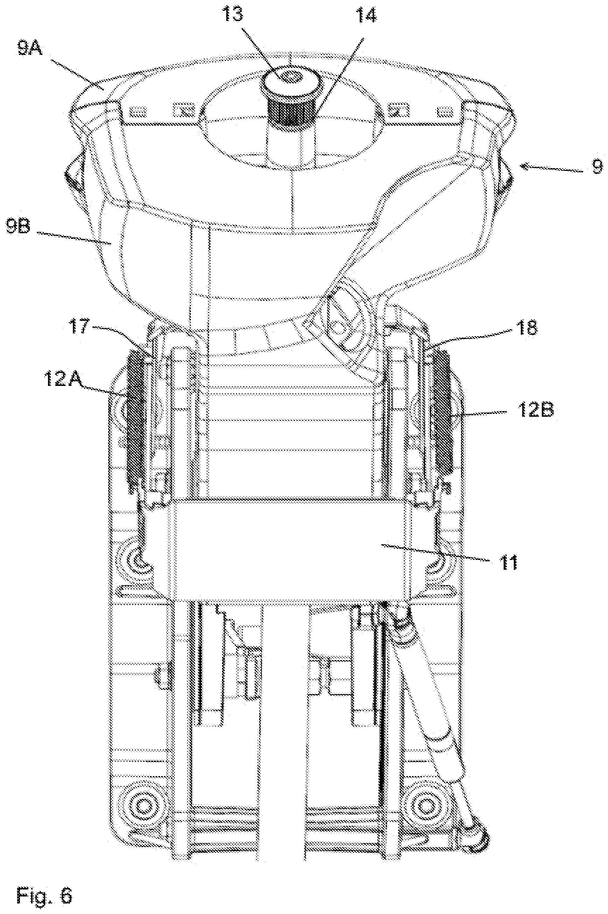

As mentioned above the movable steering wheel column assembly 5 comprises a movable steering wheel column cover 9, in the shown embodiment composed of two movable steering wheel column cover halves 9A, 9B which movable steering wheel column cover 9 - when assembled as shown in Figures 4 to 6 - encloses the first and the second movable guide plates 15, 16 and the steering axle housing 14. The movable steering wheel column cover 9 is fixedly attached to the first and the second movable guide plate 15, 16. According to the invention the movable steering wheel column cover 9 is positioned between the first and the second stationary guide flange 17, 18, thereby providing a compact construction which can be positioned in a relatively small dashboard recess while still providing a large adjustment field for the steering wheel 4.

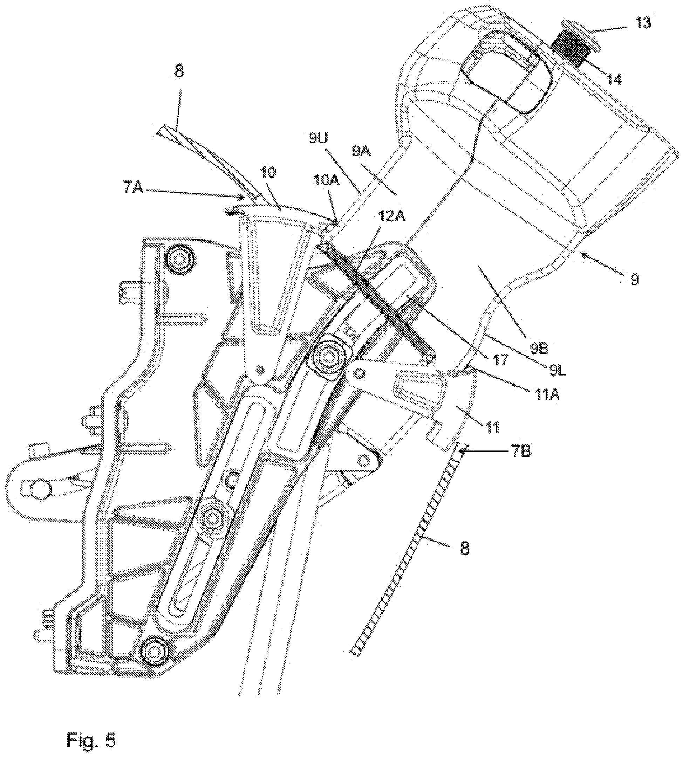

As indicated in Figures 2 and 5 the dashboard recess 7 comprises the upper gap 7A above the movable steering wheel column cover 9 and the lower gap 7B below the movable steering wheel column cover 9. The rotatable upper gap cover 10 is arranged for covering the upper gap 7A and the rotatable lower gap cover 11 is arranged for covering the lower gap 7B. The upper gap cover 10 is rotatably mounted to the first and second stationary guide flanges 17, 18 that are fixedly and stationary attached to the cabin frame 2 and has a lower edge 10A in engagement with an upper surface 9U of the movable steering wheel column cover 9. Analogously the lower gap cover 11 is rotatably mounted to the first and second stationary guide flanges 17, 18 that are fixedly and stationary attached to the cabin frame 2 and has an upper edge 11A in engagement with a lower surface 9L of the movable steering wheel column cover 9. Consequently the upper and lower gap cover 10, 11 are mounted to stationary parts of the cabin frame 2. In particular, and as indicated in the embodiments shown in Figures 3 to 6 the upper gap cover 10 and the lower gap cover 11 are rotatably mounted to the first stationary guide flange 17 and the second stationary guide flange 18 by means of studs 19, 20 (see Fig. 3). In Figure 3 it can be seen that the studs 19, 20 are provided at the side of the first stationary guide flap 17 opposite the movable steering wheel column assembly 5. Although not visible in Figure 3 similar studs 19, 20 are also provided at the side of the second stationary guide flap 18 opposite the movable steering wheel column assembly 5.

As mentioned above, the upper gap cover 10 and the lower gap cover 11 are connected with each other by means of at least two tension springs 12. A first spring 12A is positioned at a side of the upper and lower gap covers 10, 11 near the first stationary guide flange 17 and a second spring 12B is positioned at a side of the upper and lower gap covers 10, 11 near the second stationary guide flange 18, the springs 12A, 12B extending along the sides of the first and the second stationary guide flanges 17, 18 opposite the movable steering wheel column assembly 5. As a result of mutually connecting the upper and lower gap covers 10, 11 by means of the spring 12A, 12B the tension in the springs 12A, 12B can be kept to a minimum over the total adjustment field of the steering wheel 4. In the extreme positions of the movable steering wheel column assembly 5 the tension force in the springs is about the same as in the more neutral position.

## Claims

1. A driver's cabin (1) of a vehicle, in particular a heavy goods vehicle, the driver's cabin (1) comprising a cabin frame (2), a dashboard (8) fixedly attached to the cabin frame (2), the dashboard (8) comprising a dashboard recess (7) for a steering wheel assembly (3), a steering wheel assembly (3), said steering wheel assembly (3) comprising a movable steering wheel column assembly (5) and a stationary guide plate assembly (6), the movable steering wheel column assembly (5) comprising:
- a steering axle (13) for a steering wheel (4), the steering axle (13) having a longitudinal steering axle axis (13A) defining a longitudinal steering axle axis direction;
- a steering axle housing (14) enclosing the steering axle (13); the steering axle (13) being arranged in the steering axle housing (14) for rotating around the longitudinal steering axle axis (13A) and the steering axle (13) being fixed in the longitudinal steering axle axis direction with regard to the steering axle housing (14); and
- a first movable guide plate (15) and a second movable guide plate (16), the steering axle housing (14) being positioned between the first and the second movable guide plate (15, 16) and being fixedly attached to the first and the second movable guide plate (15, 16);
the stationary guide plate assembly (6) comprising;
- a first stationary guide flange (17) and a second stationary guide flange (18), the first and the second stationary guide flange (17, 18) each being fixedly and stationary attached to the cabin frame (2);
wherein the movable steering wheel column assembly (5) is positioned between the first stationary guide flange (17) and the second stationary guide flange (18), and wherein the movable steering wheel column assembly (5) further comprises a movable steering wheel column cover (9) enclosing the first and the second movable guide plate (15, 16) and the steering axle housing (14) and being fixedly attached to the first and the second movable guide plate (15, 16), **characterized in that** the first and the second movable guide plate (15, 16) of the movable steering wheel column assembly (5) and the first and the second stationary guide flange (17, 18) of the stationary guide plate assembly (6) comprise cooperating means for adjustment of the inclination and the position in the longitudinal steering axle axis direction of the movable steering wheel column assembly (5), and **in that,** the movable steering wheel column cover (9) is positioned between the first and the second stationary guide flange (17, 18).

2. A driver's cabin (1) of a vehicle according to claim 1, wherein the dashboard recess (7) comprises an upper gap (7A) above the movable steering wheel column cover (9) and a lower gap (7B) below the movable steering wheel column cover (9), the cabin (1) further comprising a rotatable upper gap cover (10) for covering the upper gap (7A), the upper gap cover (10) being rotatably mounted to the first and the second stationary guide flanges (17, 18) and having a lower edge (10A) in engagement with an upper surface (9U) of the movable steering wheel column cover (9) and a rotatable lower gap cover (11) for covering the lower gap (7B), the lower gap cover (11) being rotatably mounted to the first and the second stationary guide flanges (17, 18) and having an upper edge (11A) in engagement with a lower surface (9L) of the movable steering wheel column cover (9).

3. A driver's cabin (1) of a vehicle according to claim 2, wherein the upper gap cover (10) and the lower gap cover (11) are rotatably mounted to the first stationary guide flange (17) and the second stationary guide flange (18) on studs (19, 20), the studs being provided at sides of the first and the second stationary guide flanges (17, 18) opposite the movable steering wheel column assembly (5).

4. A driver's cabin (1) of a vehicle according to claim 2 or 3, wherein the upper gap cover (10) and the lower gap cover (11) are connected with each other by means of at least two tension springs (12A, 12B), a first one (12A) of the at least two springs (12A, 12B) being positioned at a side of the upper and lower gap covers (10, 11) near the first stationary guide flange (17), and a second one (12B) of the at least two springs (12A, 12B) being positioned at a side of the upper and lower gap covers (10, 11) near the second stationary guide flange (18), the springs (12A, 12B) extending along the sides of the first and the second stationary guide flanges (17, 18) opposite the movable steering wheel column assembly (5).

## Patentansprüche

1. Fahrerkabine (1) eines Fahrzeugs, insbesondere eines Lastkraftwagens, wobei die Fahrerkabine (1) einen Kabinenrahmen (2) und ein fest an dem Kabinenrahmen (2) angebrachtes Armaturenbrett (8) umfasst, wobei das Armaturenbrett (8) Folgendes umfasst: eine Armaturenbrettaussparung (7) für eine Lenkradbaugruppe (3), eine Lenkradbaugruppe (3), wobei die Lenkradbaugruppe (3) eine bewegliche Lenkradsäulenbaugruppe (5) und eine stationäre Führungsplattenbaugruppe (6) umfasst, wobei die bewegliche Lenkradsäulenbaugruppe (5) umfasst:
- eine Lenkachse (13) für ein Lenkrad (4), wobei die Lenkachse (13) eine Lenkachslängsachse (13A) aufweist, die eine Lenkachslängsachsenrichtung definiert;
- ein Lenkachsgehäuse (14), das die Lenkachse (13) umschließt; wobei die Lenkachse (13) im Lenkachsgehäuse (14) um die Lenkachslängsachse (13A) drehbar angeordnet ist und die Lenkachse (13) in Richtung der Lenkachslängsachse gegenüber dem Lenkachsgehäuse (14) befestigt ist; und
- eine erste bewegliche Führungsplatte (15) und eine zweite bewegliche Führungsplatte (16), wobei das Lenkachsgehäuse (14) zwischen der ersten und der zweiten beweglichen Führungsplatte (15, 16) angeordnet ist und fest an der ersten und der zweiten beweglichen Führungsplatte (15, 16) angebracht ist;
wobei die stationäre Führungsplattenbaugruppe (6) umfasst:
- einen ersten stationären Führungsflansch (17) und einen zweiten stationären Führungsflansch (18), wobei der erste und der zweite stationäre Führungsflansch (17, 18) jeweils fest und stationär an dem Kabinenrahmen (2) angebracht sind;
wobei die bewegliche Lenkradsäulenbaugruppe (5) zwischen dem ersten stationären Führungsflansch (17) und dem zweiten stationären Führungsflansch (18) angeordnet ist, und wobei die bewegliche Lenkradsäulenbaugruppe (5) ferner eine bewegliche Lenkradsäulenabdeckung (9) umfasst, die die erste und die zweite bewegliche Führungsplatte (15, 16) und das Lenkachsgehäuse (14) umschließt und fest an der ersten und der zweiten beweglichen Führungsplatte (15, 16) angebracht ist, **dadurch gekennzeichnet, dass** die erste und die zweite bewegliche Führungsplatte (15, 16) der beweglichen Lenkradsäulenbaugruppe (5) und der erste und der zweite stationäre Führungsflansch (17, 18) der stationären Führungsplattenbaugruppe (6) zusammenwirkende Mittel zur Einstellung der Neigung und der Position in Richtung der Längslenkachse der beweglichen Lenkradsäulenbaugruppe (5) umfassen, und dass die bewegliche Lenkradsäulenabdeckung (9) zwischen dem ersten und dem zweiten stationären Führungsflansch (17, 18) angeordnet ist.

2. Fahrerkabine (1) eines Fahrzeugs nach Anspruch 1, wobei die Armaturenbrettaussparung (7) einen oberen Spalt (7A) oberhalb der beweglichen Lenkradsäulenabdeckung (9) und einen unteren Spalt (7B) unterhalb der beweglichen Lenkradsäulenabdeckung (9) aufweist, wobei die Kabine (1) ferner eine drehbare obere Spaltabdeckung (10) zum Abdecken des oberen Spalts (7A) umfasst, wobei die obere Spaltabdeckung (10) drehbar an dem ersten und dem zweiten stationären Führungsflansch (17, 18) angebracht ist und einen unteren Rand (10A) aufweist, der mit einer oberen Fläche (9U) der beweglichen Lenkradsäulenabdeckung (9) in Eingriff steht, und eine drehbare untere Spaltabdeckung (11) zum Abdecken des unteren Spalts (7B), wobei die untere Spaltabdeckung (11) drehbar an dem ersten und dem zweiten stationären Führungsflansch (17, 18) angebracht ist und einen oberen Rand (11A) aufweist, der mit einer unteren Fläche (9L) der beweglichen Lenkradsäulenabdeckung (9) in Eingriff steht.

3. Fahrerkabine (1) eines Fahrzeugs nach Anspruch 2, wobei die obere Spaltabdeckung (10) und die untere Spaltabdeckung (11) drehbar an dem ersten stationären Führungsflansch (17) und dem zweiten stationären Führungsflansch (18) auf Zapfen (19, 20) angebracht sind, wobei die Zapfen an den Seiten des ersten und des zweiten stationären Führungsflansches (17, 18) gegenüber der beweglichen Lenkradsäulenbaugruppe (5) vorgesehen sind.

4. Fahrerkabine (1) eines Fahrzeugs nach Anspruch 2 oder 3, wobei die obere Spaltabdeckung (10) und die untere Spaltabdeckung (11) durch mindestens zwei Zugfedern (12A, 12B) miteinander verbunden sind, wobei eine erste (12A) der mindestens zwei Federn (12A, 12B) an einer Seite der oberen und unteren Spaltabdeckung (10, 11) in der Nähe des ersten stationären Führungsflansches (17) angeordnet ist, und eine zweite (12B) der mindestens zwei Federn (12A, 12B) an einer Seite der oberen und unteren Spaltabdeckung (10, 11) in der Nähe des zweiten stationären Führungsflansches (18) angeordnet ist, wobei sich die Federn (12A, 12B) entlang der Seiten des ersten und des zweiten stationären Führungsflansches (17, 18) gegenüber der beweglichen Lenkradsäulenbaugruppe (5) erstrecken.

## Revendications

1. Cabine de conducteur (1) d'un véhicule, en particulier d'un véhicule poids lourd, la cabine de conducteur (1) comprenant un cadre de cabine (2), un tableau de bord (8) fixé de manière fixe au cadre de cabine (2), le tableau de bord (8) comprenant un évidement de tableau de bord (7) pour un ensemble volant de direction (3), un ensemble volant de direction (3), ledit ensemble volant de direction (3) comprenant un ensemble colonne de volant de direction mobile (5) et un ensemble plaque de guidage stationnaire (6), l'ensemble colonne de volant de direction mobile (5) comprenant :
- un essieu de direction (13) pour un volant de direction (4), l'essieu de direction (13) présentant un axe d'essieu de direction longitudinal (13A) définissant une direction d'axe d'essieu de direction longitudinal ;
- un boîtier d'essieu de direction (14) renfermant l'essieu de direction (13) ; l'essieu de direction (13) étant agencé dans le boîtier d'essieu de direction (14) pour tourner autour de l'axe d'essieu de direction longitudinal (13A) et l'essieu de direction (13) étant fixé dans la direction d'axe d'essieu de direction longitudinal par rapport au boîtier d'essieu de direction (14) ; et
- une première plaque de guidage mobile (15) et une seconde plaque de guidage mobile (16), le boîtier d'essieu de direction (14) étant positionné entre la première et la seconde plaque de guidage mobile (15, 16) et étant fixé de manière fixe à la première et à la seconde plaque de guidage mobile (15, 16) ;
l'ensemble de plaques de guidage stationnaires (6) comprenant :
- une première bride de guidage stationnaire (17) et une seconde bride de guidage stationnaire (18), la première et la seconde bride de guidage stationnaire (17, 18) étant fixées chacune de manière fixe et stationnaire au cadre de cabine (2) ;
dans laquelle l'ensemble colonne de volant de direction mobile (5) est positionné entre la première bride de guidage stationnaire (17) et la seconde bride de guidage stationnaire (18), et dans lequel l'ensemble colonne de volant de direction mobile (5) comprend en outre un couvercle colonne de volant de direction mobile (9) renfermant la première et la seconde plaque de guidage mobile (15, 16) et le boîtier d'axe d'essieu de direction (14) et étant fixé de manière fixe à la première et à la seconde plaque de guidage mobile (15, 16), **caractérisé en ce que** la première et la seconde plaque de guidage mobile (15, 16) de l'ensemble colonne de volant de direction mobile (5) et la première et la seconde bride de guidage stationnaire (17, 18) de l'ensemble de plaques de guidage stationnaires (6) comprennent des moyens de coopération pour un ajustement de l'inclinaison et de la position dans la direction d'axe d'essieu de direction longitudinal de l'ensemble colonne de volant de direction mobile (5), et **en ce que** le couvercle colonne de volant de direction mobile (9) est positionné entre la première et la seconde bride de guidage stationnaire (17, 18).

2. Cabine de conducteur (1) d'un véhicule selon la revendication 1, dans laquelle l'évidement de tableau de bord (7) comprend un espace supérieur (7A) au-dessus du couvercle colonne de volant de direction mobile (9) et un espace inférieur (7B) au-dessous du couvercle colonne de volant de direction mobile (9), la cabine (1) comprenant en outre un couvercle d'espace supérieur rotatif (10) pour couvrir l'espace supérieur (7A), le couvercle d'espace supérieur (10) étant monté de manière rotative sur les première et seconde brides de guidage stationnaires (17, 18) et présentant un bord inférieur (10A) en prise avec une surface supérieure (9U) du couvercle colonne de volant mobile (9) et un couvercle d'espace inférieur rotatif (11) pour couvrir l'espace inférieur (7B), le couvercle d'espace inférieur (11) étant monté de manière rotative sur les première et seconde brides de guidage stationnaires (17, 18) et présentant un bord supérieur (11A) en prise avec une surface inférieure (9L) du couvercle colonne de volant de direction mobile (9).

3. Cabine de conducteur (1) d'un véhicule selon la revendication 2, dans laquelle le couvercle d'espace supérieur (10) et le couvercle d'espace inférieur (11) sont montés de manière rotative sur la première bride de guidage stationnaire (17) et la seconde bride de guidage stationnaire (18) sur des goujons (19, 20), les goujons étant prévus sur des côtés des première et seconde brides de guidage stationnaires (17, 18) à l'opposé de l'ensemble colonne de volant de direction mobile (5).

4. Cabine de conducteur (1) d'un véhicule selon la revendication 2 ou 3, dans laquelle le couvercle d'espace supérieur (10) et le couvercle d'espace inférieur (11) sont reliés l'un à l'autre au moyen d'au moins deux ressorts de tension (12A, 12B), un premier (12A) des au moins deux ressorts (12A, 12B) étant positionné d'un côté des couvercles d'espace supérieur et inférieur (10, 11) à proximité de la première bride de guidage stationnaire (17), et un second (12B) des au moins deux ressorts (12A, 12B) étant positionné d'un côté des couvercles d'espace supérieur et inférieur (10, 11) à proximité de la seconde bride de guidage stationnaire (18), les ressorts (12A, 12B) s'étendant le long des côtés des première et seconde brides de guidage stationnaires (17, 18) à l'opposé de l'ensemble colonne de direction mobile (5).
